# EUROPEAN PATENT SPECIFICATION

(11) **EP 2 271 487 B1**
(45) Date of publication and mention of the grant of the patent: **07.06.2017**
(21) Application number: 09739206.2
(22) Date of filing: 30.04.2009
(51) Int. Cl.: E04F 15/02, B32B 5/16, B32B 27/08, B32B 27/20, B32B 27/36

(54) **BIOBASED RESILIENT FLOOR TILE**
ELASTISCHE BODENFLIESE AUF BIOBASIS
CARREAU POUR PLANCHER SOUPLE D'ORIGINE BIOLOGIQUE

(30) Priority: 30.04.2008 US 125975 P
(43) Date of publication of application: 12.01.2011
(73) Proprietor: Armstrong World Industries, Inc., Lancaster, PA 17604-3001 (US)
(72) Inventor: TIAN, Dong, Lancaster PA 17601 (US); ROSS, Jeffrey, S., Lancaster PA 17603 (US); WINEY, Rebecca, L., Lancaster PA 17603 (US)
(74) Representative: Sloboshanin, Sergej
(86) International application number: PCT/US2009/002656
(87) International publication number: WO 2009/134403

(56) References cited:
- US-A1- 2005 050 565
- US-A1- 2005 227 056
- US-A1- 2008 081 158
- US-A1- 2008 081 158
- STEINBUCHEL ET AL.: 'Bacterial and other biological systems for polyester production' SCIENCE, [Online] 1998, XP004145649 Retrieved from the Internet: <URL:http://www.sciencedirect.com/science? ob=ArtiGeURLB udi=86TCW-3V8TMB3 58_user--108_rdoc=18 fmt=8 orig=search& sort=d&view=c8_acct=C000050221& version=1 1 8 urlVersion=08_userid=108md5=Oc769aad8c9477d 6894b702b1dc5981c> [retrieved on 2009-06-18]

## Description

The present invention relates to resilient flooring products and more particularly to a biobased resilient floor tile. Resilient flooring products, such as residential tiles, typically have at least one layer made from polymeric binders, such as polyvinyl chloride. However, the use of polyvinyl chloride is argued to pose a threat to human and environmental health due to its effect on the recycling stream. Not only is polyvinyl chloride not typically recyclable due to the prohibitive cost of regrinding and re-compounding the resin, but also, polyvinyl chloride is manufactured using fossil fuels, such as petroleum and coal, which additionally negatively impacts the environment.

In response to the growing controversy over the manufacture, use, and disposal of polyvinyl chloride, commercial efforts been made to develop materials and polymers from other resources. For example, efforts have been made to use functionalized polyolefins, such as ethylene acrylic acid co-polymers, and other polyolefin materials as polymeric binders for flooring products. Due to the chemical composition of polyolefin, however, conventional adhesives and waxes can not be used on flooring products formed with polymeric binders made from polyolefin materials. Additionally, polyolefin is also manufactured using fossil fuels, such as petroleum and coal, which negatively impacts the environment.

Polymeric binders, therefore, still need to be developed which can be used with existing product structures and/or processes while being derived from recycled materials or renewable resources, such as biobased materials. Recycled materials are materials that have been recovered or otherwise diverted from the solid waste stream, either during the manufacturing process (pre-consumer), or after consumer use (post-consumer). Recycled materials therefore include post-industrial, as well as; post-consumer materials. Biobased materials are organic materials containing an amount of non-fossil carbon sourced from biomass, such as plants, agricultural crops, wood waste, animal waste, fats, and oils. Biobased materials formed from biomass processes have a different radioactive C14 signature than those produced from fossil fuels. Because the biobased materials are organic materials containing an amount of non-fossil carbon sourced from biomass, the biobased materials may not necessarily be derived 100% from biomass. A test has therefore been established for determining the amount of biobased content in the biobased material. Generally, the amount of biobased content in the biobased material is the amount of biobased carbon in the material or product as a fraction weight (mass) or percentage weight (mass) of total organic carbon in the material or product.

The calculation of the amount of biobased content in the material or product is important for ascertaining whether the material or product, when used in commercial construction, would qualify for Leadership in Energy and Environmental Design (LEED) certification. The US Green Building Council has established a LEED rating system which sets forth scientifically based criteria for obtaining LEED certification based on a point system. As shown in Table 1, under the LEED rating system, for new construction 1 point is granted for at least 5% wt of the total of post-consumer materials and ½ post-industrial materials. A second point is granted for at least 10% wt of the total of post-consumer materials and ½ post-industrial materials. An additional point is granted for at least 5% wt of rapidly renewable building materials and products. For existing building 1 point is granted for at least 10% wt post-consumer materials. A second point is granted for at least 20% wt of post-industrial materials. An additional point is granted for at least 50% wt of rapidly renewable materials. Thus, flooring products meeting the LEED criteria can be used to obtain points for LEED certification.

**Table 1 - LEED Rating System**

| Rating System | LEED - Version 2.1 New Construction | Rating System | LEED - Version 2.0 Existing Building |
|---|---|---|---|
| MR Credit 4.1 1 Point | = 5% wt of post-consumer materials + ½ post-industrial materials | MR Credit 2.1 1 Point | = 10% wt of post-consumer materials |
| MR Credit 4.2 1 Point | = 10% wt of post-consumer materials + ½ post-industrial materials | MR Credit 2.1 1 Point | = 20% wt of post-industrial materials |
| MR Credit 6 1 Point | = 5% wt of rapidly renewable building materials and products | MR Credit 2.5 1 Point | = 50% wt of rapidly renewable materials |

Because there has been renewed market interest in giving preference to "greener" flooring products based upon the LEED rating system, there remains a need to develop "greener" flooring products based upon existing product structures and/or processes and available recycled and/or renewable materials. The key to this approach is to integrate recycled materials and/or rapidly renewable materials, such as biobased materials, into polymeric binder systems for resilient flooring products thereby reducing reliance on limited resources, such as fossil fuels.

U.S. Patent Application Publication No. 2008/0081158 A1 discloses a flooring product comprising recycled material.

The invention provides a resilient flooring product comprising at least one base layer, at least one film layer, and a topcoat. The base layer includes a polymeric binder and a filler. The base layer has at least 20 - 95% weight of the filler and at least 5% weight of recycled material. The film layer is supported by the base layer. The film layer is a rigid film selected from the group consisting of polyethyleneterephthalate, glycolated polyethyleneterephthalate, polybutylene terephthalate, polypropylene terephthalte, or a thermoplastic ionomer resin. The topcoat is provided on the film layer. The topcoat is a radiation curable biobased coating comprising a biobased component selected from the group consisting of a biobased resin, a biobased polyol acrylate, or a biobased polyol.

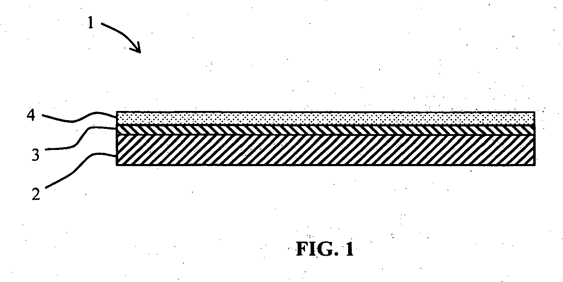

Figure 1 is a cross-sectional view of a resilient flooring product according to an embodiment of the invention. The resilient flooring product shown and described herein is a biobased resilient floor tile 1. As shown in Figure 1, the biobased resilient floor tile 1 comprises at least one base layer 2, at least one film layer 3, and a topcoat 4. It will be appreciated by those skilled in the art, however, that the resilient flooring product is not limited to the structure shown and described herein. For example, the resilient flooring product may comprise additional base layers and/or additional film layers. Additionally, at least one of the film layers may be clear and/or back printed. Further, the thickness of the base layer 2, the film layer 3, and the topcoat 4 may be varied depending on the desired characteristics of the resilient flooring product.

In the illustrated embodiment, the base layer 2 comprises a polymeric binder and a filler. The polymeric binder may be, for example, a thermoplastic polyester resin including at least one recyclable or renewable component. As used in this disclosure, "thermoplastic" means a polymer that softens when exposed to heat and returns to its original condition when cooled to room temperature, whereas "thermoset" means a polymer that solidifies or sets irreversibly when heated. Thermoset is usually associated with a cross-linking reaction of the molecular constituents induced by heat or radiation. The polymeric binder or the polyester resin may also contain functional groups that could involve dynamic vulcanization with other active additives during the manufacturing processes. The functional groups may be, for example, acid or hydroxyl groups. The active additives could be an epoxy, amine, isocyanate containing compounds, oligomers, or polymers. The epoxy may be, for example, epoxidized natural oils, such as epoxidized soy oils, epoxidized linseed oils, vernonia oil, or combinations thereof. The polyester resin may be, for example, amorphous, or crystalline and may contain, for example, aromatic and/or aliphatic diacid and diol components. The polyester resin may also be of a high molecular weight. An example of a suitable polyester resin includes, for example, the commercially available polyester resin ECOFLEX FBX7011 manufactured by BASF SE of Ludwigshafen, Germany, which is a high molecular weight, biodegradable, aliphatic-aromatic copolyester based on butanediol, adipic acid, and terephthalic acid exhibiting a Tg of -25 degrees Celsius and a Tm of 115 degrees Celsius. Other examples of suitable polyester resins are disclosed, for example, in U.S. Patent Application Publication No. 2008/0081882 A1.

The filler may be, for example, limestone, talc, or other minerals. The filler may be a recyclable or renewable material. Recycled fillers generated from post-industrial processes include limestone, quartz, ceramic powders, glass, fly ash, concrete powder, and other minerals. Additionally, recyclable fillers may be obtained from wood or plants, such as pecan shells, wood flour, saw dust, walnut shells, rice hulls, corn cob grit, and others. Other post-industrial or renewable fillers include inorganic fillers, such as ground shells from animals, for example, clams and coral, which contain biobased content. Recycle thermoset resin based fillers can also be employed. For example, powders produced by grinding thermoset polyester materials, such as products made from bulk molding compounds (BMC) or sheet molding compounds (SMC) can be post-industrial, as well as post-consumer materials. Another thermoset material of interest is recycled fillers made from urea formaldehyde thermoset resins. Depending upon the source, these materials can also be post-industrial or post-consumer. Another example includes ground, cured (cross-linked) rubber materials such as used in tires. These rubbers materials can be based on natural or synthetic rubbers, polyurethanes, or other well known thermoset rubber compositions. Additionally, recycled thermoplastic resin based materials may be employed as fillers if they are incompatible with the polyester binder. For example, polyethylene (PE), polypropylene, polyamide, polyester, polystyrene, polycarbonate, acrylonitrile butadiene styrene, and thermoplastic rubbers may be incompatible with the high molecular weight polyester binder. Such materials, if added as particulate will essentially function as fillers in these compositions. The base layer 2 contains 20 - 95% weight of the filler, preferably 40-90% weight of the filler, and more preferably 50 - 85% weight of the filler. Additionally, the use of different sized limestone filler yields better processibility and improved performance.

Table 2 shows some examples of some base layer formulations. In Table 2, the AWI polyester is an Armstrong World Industries, Inc.'s amorphous polyester. Examples of AWI polyesters are described in Tables 5C - 5D of U.S. Patent Application Publication No. 2008/0081882 A1, which was previously incorporated by reference in its entirety. Specifically, the AWI polyester of Table 2 is EX-36 from U.S. Patent Application Publication No. 2008/0081882 A1. A plurality of the base layer formulations in Table 2 contains a weight percentage of recycled material of at least 5% and more preferably at least 10%. Additionally, a plurality of the base layer formulations in Table 2 contains a weight percentage of biobased content of at least 3% and more preferably at least 9%. The use of recycle fillers in the base layer formulations therefore allows the biobased resilient floor tile 1 to qualify for at least one point within the LEED System. The base layer formulations of examples 6,7,8,9 and 13 are not according the invention.

**Table 2 - Base Layer Formulations**

| | | EX-1 | EX-2 | EX-3 | EX-4 | Ex-5 | EX-6 | |
|---|---|---|---|---|---|---|---|---|
| Ingredient | Trade Name | Amt (g) | Amt (g) | Amt (g) | Amt (g) | Amt (g) | Amt (g) | |
| Limestone | Imerys DP-04 | 82.10 | 68.73 | 68.73 | 0 | 0 | 0 | |
| Recycled Limestone | SYCX 3359 | 16.67 | 16.67 | 20.84 | 20.84 | 20.84 | 0 | |
| Limestone | Vical 5030 | 0 | 0 | 0 | 85.91 | 90.91 | 106.75 | |
| Pigment | Kronos 2220 | 0.60 | 0.60 | 0.75 | 0.75 | 0.75 | 0.75 | |
| Polyester | AWI Polyester | 7.00 | 0 | 8.75 | 8.75 | 6.25 | 8.75 | |
| Polyester | Ecoflex FBX7011 | 7.00 | 14.00 | 8.75 | 8.75 | 6.25 | 8.75 | |
| Total | | 100.00 | 100.00 | 125.00 | 125.00 | 125.00 | 125.00 | |
| Wt % Recycled Material | | 10.0 | 10.0 | 10.0 | 10.0 | 10.0 | 0 | |
| Wt% Biobased Content | | 9.0 | 0 | 9.0 | 9.0 | 9.0 | 9.0 | |
| Wt% Binder | | 14.0 | 14.0 | 14.0 | 14.0 | 10.0 | 14.0 | |
| Wt% Filler | | 83.53 | 86.0 | 86.0 | 86.0 | 90.0 | 86.0 | |
| Mixer Temp (°F) | | 351 | 351 | 351 | 351 | 351 | 351 | |
| Batch Time (min) | | 8:30 | 8:30 | 8:00 | 8:00 | 8:00 | 8:06 | |
| Mix Drop Temp (°F) | | 366.8 | 370.4 | 381.2 | 388.4 | 375.8 | 386.6 | |
| | | | | | | | | |

| | | EX-7 | EX-8 | EX-9 | EX-10 | EX-11 | EX-12 | EX-13 |
|---|---|---|---|---|---|---|---|---|
| Ingredient | Trade Name | Amt (g) | Amt (g) | Amt (g) | Amt (g) | Amt (g) | Amt (g) | Amt (g) |
| Limestone | Imerys DP-04 | 0 | 0 | 0 | 0 | 0 | 0 | 849.0 |
| Recycled Limestone | SYCX 3359 | 0 | 0 | 0 | 0 | 0 | 0 | 0 |
| Limestone | Vical 5030 | 111.75 | 106.75 | 111.75 | 85.92 | 90.92 | 125.16 | 0 |
| Pigment | Kronos 2220 | 0.75 | 0.75 | 0.75 | 0.75 | 0.75 | 0.84 | 6.0 |
| Polyester | AWI Polyester | 6.25 | 0 | 0 | 0 | 0 | 0 | 72.50 |
| Polyester | Ecoflex FBX7011 | 6.25 | 17.50 | 12.50 | 17.50 | 12.50 | 14.00 | 72.50 |
| Total | | 125.0 | 125.0 | 125.0 | 125.0 | 125.0 | 140.0 | 1000 |
| Wt % Recycled Material | | 0 | 0 | 0 | 10.0 | 10.0 | 10.0 | 0 |
| Wt % Biobased Content | | 9.0 | 0 | 0 | 0 | 0 | 0 | 9.0 |
| Wt% Binder | | 10 | 14 | 10 | 14 | 10 | 10 | 14.5 |
| Wt% Filler | | 90 | 86 | 90 | 86 | 90 | 90 | 85.5 |
| Mixer Temp (°F) | | 351 | 351 | 351 | 351 | 351 | 351 | 320 |
| Batch Time (min) | | 8:00 | 8:00 | 8:00 | 8:00 | 8:00 | 8:00 | 15:00 |
| Mix Drop Temp (°F) | | 374.0 | 419.0 | 386.6 | 419.0 | 386.6 | 408.2 | 270.0 |

The base layer formulations of EX-1 - EX-12 in Table 2 were mixed using a medium intensity Haake Rheocord 9000 heated mixer (Haake mixer). The ingredients were added to the Haake mixer which was heated to 351 degrees Fahrenheit. The formulations were mixed and heated for approximately 8 minutes on average in the Haake mixer to a drop temperature of 389 degrees Fahrenheit on average. Depending upon the formulation, mixing time varied between 8 - 8.5 minutes and drop temperature varied between 366-419 degrees Fahrenheit. A low intensity heated mixer, such as "dough" mixer or Baker Perkins type mixer may be used to compound and melt mix the formulation which is subsequently calendered into the base layer 2. The formulation listed as EX-13 in Table 2 was mixed in a Baker Perkins type mixer and the hot mix was dropped into the nip of a two roll calender. The rolls of the calender were set at different temperatures wherein one roll was hotter than the other. Typically, the hot roll was set at 285 degrees Fahrenheit, and the cold roll was set at 240 degrees Fahrenheit. The nip opening between the calender mill rolls were set to provide a final sheet thickness of 123 mils. Alternatively, the base layer 2 may be prepared using a high intensity heated mixer, such as an extruder or Farrell type mixer, that operates at a higher temperature than the low intensity mixer.

Since formulations based solely on ECOFLEX FBX7011 in pellet form can not be adequately mixed in the low intensity mixer, the base layer formulations of Table 2 are based on blends of the AWI polyester and ECOFLEX FBX7011. Because there is not enough heat transfer and shear within the mix to breakdown the pellet form of the ECOFLEX FBX7011, the addition of the AWI polyester enables the physical nature of the mix to change thereby allowing the ECOFLEX FBX7011 to be incorporated. The base layer 2 may also include other ingredients such as processing aids, tackifiers, hydrophobic agents, stabilizers, colourants and other known additives. Of particular interest, the base layer 2 may also contain up to 30% by weight of one or more additional polymers or reactive additives. The additional polymers may assist in processing in the low intensity mixer, and also may assist in achieving improved physical properties. The additional polymers may consist of hydroxyl functionalized polymers, such as hydroxyl end-capped polyester, and may also consist of acid functionalized polymers including excitatory amino acids, ethylene methyl acrylate, and partially neutralized versions thereof (ionomers), or other (methacrylic) acrylic acid, or maleic acid (anhydride) copolymers to obtain desired process and physical properties. The functionalized polymers may enhance physical properties by dynamically reacting with the active additives during the manufacturing process, such as during mixing and calendering.

The film layer 3 is a rigid film comprised of polyethyleneterephthalate (PET), glycolated polyethyleneterephthalate (PETG), polybutylene terephthalate (PBT), polypropylene terephthalte (PPT), or a thermoplastic ionomer resin, such as SURLYN from E. I. du Pont de Nemours and Company. "Rigid film" is a term of art which means any film that is substantially free of plasticizers, e.g., phthalate esters, thereby imparting resistance of the polymer to deform. The film layer 3 may consist, for example, of recycled material, such as recycled polyethyleneterephthalate or polybutylene terephthalate modified by renewable polyesters, as described in US Patent Application Publication No. 2008/0081882 A1.

The film layer 3 is provided with a topcoat 4. The topcoat 4 is coated in a liquid or flowable form onto the film at a thickness of about 1 mil and then cured. It is known to cure the topcoat 4 by controlled exposure to radiation, such as ultraviolet or electron beam radiation. The topcoat 4 is a radiation curable biobased coating comprising a biobased component. The biobased component may be, for example, a biobased polyol, acylated biobased polyol, or biobased resin derived, for example, from renewable and/or biobased materials, such as plant oils, polyester, polyester-ether, vegetable oils, corn, cellulose, starch, sugar, or sugar alcohols. Examples of suitable radiation curable biobased coatings are disclosed in US Patent Application Serial No. 12/432,845 and US Patent Application Serial No. 61/173,996. Additionally, it will be appreciated by those skilled in the art that although the topcoat 4 is shown and described herein as being a single layer topcoat, that the topcoat 4 could alternatively be a multiple layer topcoat.

After the topcoat 4 is applied to the film layer 3, the film layer 3 is laminated to the base layer 2. The film layer 3 may be laminated, for example, with a press for about 5 minutes at 265 degrees Fahrenheit under 1000 psi of pressure. The film layer 3 is then cooled to 100 degrees Fahrenheit while still under 1000 psi of pressure.

## Claims

1. A resilient flooring product, comprising:
at least one base layer (2), the base layer (2) comprising a polymeric binder and a filler, the base layer (2) having at least 20-95% weight of the filler and at least 5% weight of recycled material;
at least one film layer (3) supported by the base layer (2), the film layer (3) being a rigid film selected from the group consisting of polyethylene terephthalate, glycolated polyethylene terephthalate, polybutylene terephthalate, polypropylene terephthalate, and a thermoplastic ionomer resin; and
includes a topcoat (4), wherein the topcoat (4) is provided on the film layer (3) and the topcoat (4) is a radiation curable coating, the radiation curable coating is a radiation curable biobased coating comprising a biobased component selected from the group consisting of a biobased resin, biobased acrylate, and a biobased polyol.

2. The resilient flooring product of claim 1, wherein the base layer (2) has 40-90% weight of the filler.

3. The resilient flooring product of claim 2, wherein the base layer (2) has 50-85% weight of the filler.

4. The resilient flooring product of claim 1, wherein the base layer (2) has at least 10% weight of the recycled material.

5. The resilient flooring product of claim 1, wherein the polymeric binder is a polyester resin.

6. The resilient flooring product of claim 5, where the polyester resin comprises a biobased component.

7. The resilient flooring product of claim 1, wherein the filler includes recycled limestone.

8. The resilient flooring product of claim 1, wherein the film layer (3) includes recycled material.

9. The resilient flooring product of claim 8, wherein the recycled material is recycled polyethyleneterephthalate or recycled polybutylene terephthalate.

10. The resilient flooring product of claim 8, wherein the recycled polyethylene terephthalate or recycled polybutylene terephthalate is modified by a renewable polyester.

11. The resilient flooring product of claim 1, wherein the biobased component comprises plant oils, polyester, polyester-ether, vegetable oils, corn, cellulose, starch, sugar, or sugar alcohols.

## Patentansprüche

1. Elastisches Bodenbelagsprodukt, umfassend:
wenigstens eine Basisschicht (2), die ein Polymerbindemittel und einen Füller umfasst, wobei die Basisschicht (2) wenigstens 20 - 95 Gew.-% Füller und wenigstens 5 Gew.-% recyceltes Material umfasst,
wenigstens eine Folienschicht (3) mit der Basisschicht (2) als Trägerschicht, wobei die Folienschicht (3) eine steife Folie ist, ausgewählt aus der Gruppe, bestehend aus Polyethylenterephthalat, glycoliertem Polyethylenterephthalat, Polybutylenterephthalat, Polypropylenterephthalat mit einem thermoplastischen Ionomerharz, und
eine Deckschicht (4), die auf der Folienschicht (3) aufgebracht ist, wobei die Deckschicht (4) eine strahlungshärtbare Beschichtung ist, die eine strahlungshärtbare Beschichtung auf biologischer Basis darstellt, umfassend eine Komponente auf biologischer Basis, ausgewählt aus der Gruppe, bestehend aus einem Harz, Acrylat und einem Polyol, jeweils auf biologischer Basis.

2. Elastisches Bodenbelagsprodukt nach Anspruch 1, wobei die Basisschicht (2) wenigstens 40 - 90 Gew.-% Füller aufweist.

3. Elastisches Bodenbelagsprodukt nach Anspruch 2, wobei die Basisschicht (2) 50 - 85 Gew.-% Füller aufweist.

4. Elastisches Bodenbelagsprodukt nach Anspruch 1, wobei die Basisschicht (2) 10 Gew.-% recyceltes Material aufweist.

5. Elastisches Bodenbelagsprodukt nach Anspruch 1, wobei das Polymerbindemittel ein Polyesterharz ist.

6. Elastisches Bodenbelagsprodukt nach Anspruch 5, wobei das Polyesterharz eine Komponente auf biologischer Basis umfasst.

7. Elastisches Bodenbelagsprodukt nach Anspruch 1, wobei der Füller recycelten Kalkstein umfasst.

8. Elastisches Bodenbelagsprodukt nach Anspruch 1, wobei die Folienschicht (3) recyceltes Material umfasst.

9. Elastisches Bodenbelagsprodukt nach Anspruch 8, wobei das recycelte Material recyceltes Polyethylenterephthalat oder recyceltes Polybutylenterephthalat ist.

10. Elastisches Bodenbelagsprodukt nach Anspruch 8, wobei das recycelte Polyethylenterephthalat oder recycelte Polybutylenterephthalat durch einen erneuerbaren Polyester modifiziert ist.

11. Elastisches Bodenbelagsprodukt nach Anspruch 1, wobei die Komponente auf biologischer Basis Pflanzenöle, Polyester, Polyester-Ether, Pflanzenfette, Mais, Zellulose, Stärke, Zucker oder Zuckeralkohole umfasst.

## Revendications

1. Produit pour plancher souple, comprenant:
au moins une couche de base (2), la couche de base (2) comprenant un liant polymère et une matière de remplissage, la couche de base (2) ayant au moins 20-95 % en poids de la matière de remplissage et au moins 5 % en poids de matériau recyclé;
au moins une couche de film (3) supportée par la couche de base (2), la couche de film (3) étant un film rigide sélectionné dans le groupe constitué par le polyéthylène téréphtalate, le polyéthylène téréphtalate glycolisé, le polybutylène téréphtalate, le polypropylène téréphtalate et une résine ionomère thermoplastique; et
comprend un revêtement supérieur (4), dans lequel le revêtement supérieur (4) est fourni sur la couche de film (3) et le revêtement supérieur (4) est un revêtement durcissable par rayonnement, le revêtement durcissable par rayonnement est un revêtement d'origine biologique durcissable par rayonnement comprenant un composant d'origine biologique sélectionné dans le groupe constitué par une résine d'origine biologique, un acrylate d'origine biologique et un polyol d'origine biologique.

2. Produit pour plancher souple selon la revendication 1, dans lequel la couche de base (2) a 40-90 % en poids de la matière de remplissage.

3. Produit pour plancher souple selon la revendication 2, dans lequel la couche de base (2) a 50-85 % en poids de la matière de remplissage.

4. Produit pour plancher souple selon la revendication 1, dans lequel la couche de base (2) a au moins 10 % en poids du matériau recyclé.

5. Produit pour plancher souple selon la revendication 1, dans lequel le liant polymère est une résine polyester.

6. Produit pour plancher souple selon la revendication 5, dans lequel la résine polyester comprend un composant d'origine biologique.

7. Produit pour plancher souple selon la revendication 1, dans lequel la matière de remplissage comprend du calcaire recyclé.

8. Produit pour plancher souple selon la revendication 1, dans lequel la couche de film (3) comprend du matériau recyclé.

9. Produit pour plancher souple selon la revendication 8, dans lequel le matériau recyclé est du polyéthylène téréphtalate recyclé ou du polybutylène téréphtalate recyclé.

10. Produit pour plancher souple selon la revendication 8, dans lequel le polyéthylène téréphtalate recyclé ou le polybutylène téréphtalate recyclé est modifié par un polyester renouvelable.

11. Produit pour plancher souple selon la revendication 1, dans lequel le composant d'origine biologique comprend des huiles de plantes, du polyester, du polyester-éther, des huiles végétales, du maïs, de la cellulose, de l'amidon, du sucre ou des alcools glucidiques.
